# EUROPÄISCHE PATENTSCHRIFT

(11) **EP 0 848 149 B1**
(45) Veröffentlichungstag und Bekanntmachung des Hinweises auf die Patenterteilung: **28.01.2004**
(21) Anmeldenummer: 97810855.3
(22) Anmeldetag: 11.11.1997
(51) Int. Cl.: F02C 3/30

(54) **Verfahren zur Frequenzstützung beim Betrieb einer Kraftwerksanlage**
Method for frequency stabilization during operation of a power plant
Méthode pour stabilisation de fréquence pendant l'exploitation d'une centrale d'énergie

(30) Priorität: 13.12.1996 DE 19651882
(43) Veröffentlichungstag der Anmeldung: 17.06.1998
(73) Patentinhaber: ALSTOM (Switzerland) Ltd, 5401 Baden (CH)
(72) Erfinder: Frutschi, Hansultich, 5223 Riniken (CH)

(56) Entgegenhaltungen:
- EP-A- 0 517 646
- FR-A- 2 682 161
- US-A- 3 766 942
- US-A- 3 837 784
- US-A- 3 921 389
- US-A- 4 110 973
- US-A- 4 928 478
- US-A- 5 156 114
- US-A- 5 535 584
- US-A- 5 617 719

## Beschreibung

### Technisches Gebiet

Die vorliegende Erfindung betrifft ein Verfahren gemäss Oberbegriff des Anspruchs 1.

### Stand der Technik

Wenn innerhalb eines geschlossenen Stromnetzes ein relativ grosser Kraftwerksblock aus irgendeinem Grund spontan vom Netz fällt, müssen die verbleibenden Kraftwerke in der Lage sein, die fehlende Leistung umgehend zu ersetzen, soll es nicht unmittelbar zu einem Netzzusammenbruch kommen. Die Zeit, die dazu zur Verfügung steht, kann in Sekunden gemessen werden. Als Dämpfung des vollendeten Netzzusammenbruches fungieren zwar alle angehängten rotierenden Massen, wie Turbosätze und angetriebene Maschinen. Wenn es aber nicht gelingt, unwichtige Verbraucher sofort zu entlasten oder abzustellen, oder die fehlende Leistung anderweitig sofort zu beschaffen, ist der Netzzusammenbruch perfekt. Besonders exponiert für eine Kettenreaktion von Ausfällen sind einwellige Gasturbinen, weil deren Verdichter unterhalb einer gewissen, immer noch sehr hohen Drehzahl, zu pumpen beginnen können.

Andererseits eignen sich gerade einwellige Gasturbinen besonders gut, um positive Leistungssprünge zu vollziehen.

Bei einwelligen Gasturbinen kann ein Leistungssprung durch spontane Wassereinspritzung nach dem Verdichter erreicht werden. Indessen, durch eine solche Vorkehrung wird ein negativer Momentaneffekt durch die Trägheit des Brennstoffsystem ausgelöst, dergestalt, dass die Flammenstabilität in der Brennkammer nicht mehr gewährleistet werden kann, wobei die Gefahr eines Flammenlöschens immanent vorhanden ist. Darüber hinaus ist durch eine solche Wassereinspritzung kein spontaner Lastanstieg zu bewerkstelligen, denn auf den gewollten Lastanstieg reagiert die Anlage infolge Temperaturrückganges temporär mit einer negativen Antwort.

Aus der Schrift US-A-5,535,584 ist eine Gasturbinenanlage mit einer Brennkammer und einer Turbine bekannt, in welcher zur Leistungserhöhung Dampf, welcher in einem der Turbine nachgeschalteten Abhitzedampferzeuger erzeugt wird, in die Brennkammer der Anlage eingedüst wird.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art eine Vorkehrung vorzuschlagen, welche einen spontanen positiven Leistungssprung ermöglicht.

Zu diesem Zweck wird erfindungsgemäss vorgeschlagen, die Trägheit des Brennstoffsystems zu umgehen, indem die zur Verdampfung und Überhitzung des entstandenen Dampfes auf Mischtemperatur erforderliche Brennstoffmenge direkt dem beigegebenen Wasser als Basismedium beigemischt wird. Dabei muss natürlich die Bemessung der eingespritzten Wassermenge auf die jeweilige Überlastbarkeit des Generators, der Stromableitung und der Maschinenkomponenten abgestimmt werden.

Ein wesentlicher Vorteil der Erfindung ist hier darin zu sehen, dass vorzugsweise ein mit einem flüssigen Brennstoff angereicherter unter Druck stehender Wasservorrat vorgesehen wird, dessen Einspritzorgan für die Einspritzung dieses Gemisches in die Brennkammer vorzugsweise vom Gradienten des Frequenzrückganges gesteuert wird.

Das zugrundegelegte Basismedium sowie die beizumischende Brennstoffmenge ist nicht auf Wasser resp. Öl beschränkt. Andere Emulsionen und Lösungen sind auch möglich. Ferner ist es ohne weiteres möglich, als Basimedium einen Dampf oder ein Gas einzusetzen.

Vorteilhafte und zweckmässige Weiterbildungen der erfindungsgemässen Aufgabenlösung sind in den weiteren abhängigen Ansprüchen gekennzeichnet.

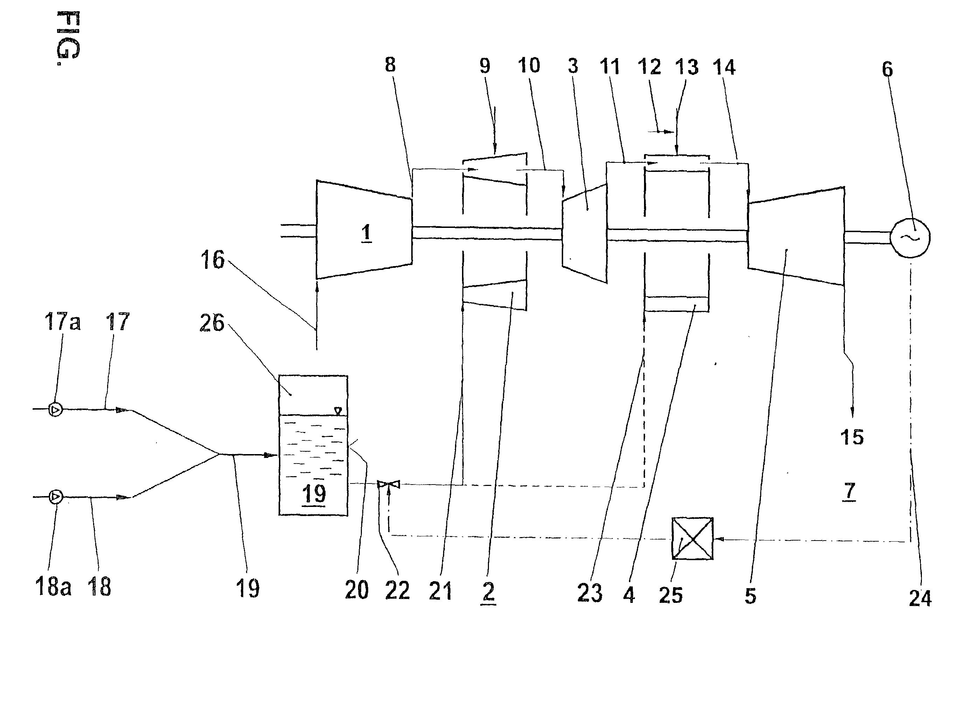

### Kurze Beschreibung der Zeichnung

Im folgenden wird anhand der Zeichnung ein Ausführungsbeispiel der Erfindung näher erläutert.

Die einzige Figur zeigt eine Gasturbogruppe mit sequentieller Befeuerung und Einspritzung einer brennstoffhaltigen Wasssermischung. Alle für das unmittelbare Verständnis der Erfindung nicht erforderlichen Elemente sind fortgelassen worden. Die Strömungsrichtung der Medien ist mit Pfeilen angegeben.

### Wege zur Ausführung der Erfindung, gewerbliche Verwendbarkeit

Die Figur zeigt eine Gasturbogruppe, welche aus einem Verdichter 1, einer dem Verdichter 1 nachgeschalteten ersten Brennkammer 2, im folgenden HD-Brennkammer genannt, einer stromab dieser Brennkammer wirkenden HD-Turbine 3, einer der HD-Turbine nachgeschalteten zweiten Brennkammer 4, im folgenden ND-Brennkammer genannt, und einer stromab dieser Brennkammer wirkenden ND-Turbine 5 besteht. Ein Generator 6 sorgt für die Stromerzeugung. Die vom Verdichter 1 angesaugte Luft 16 wird nach erfolgter Kompression als verdichtete Luft 8 in die HD-Brennkammer 2 geleitet. Diese Brennkammer 2 wird mit einem Brennstoff 9 befeuert, der an sich gasförmig und/oder flüssig sein kann, je nach Art des in dieser Brennkammer eingesetzten Brenners. Diese Brennkammer 2 wird normalerweise mit einem Diffusionsbrenner betrieben; vorzugsweise jedoch mit einem Vormischbrenner betrieben, wie er in EP-B1-0 321 809 beschrieben ist. Die Heissgase 10 aus der HD-Brennkammer 2 beaufschlagen zunächst die HD-Turbine 3. Dabei ist diese Turbine 3 so ausgelegt, dass hier eine minimale Expansion stattfindet, dergestalt, dass deren Abgase 11 eine verhältnismässig hohe Temperatur aufweisen. Stromab dieser Turbine 3 befindet sich die ND-Brennkammer 4, welche im wesentlichen die Form eines ringförmigen Zylinders hat. Diese Brennkammer 4 weist keine herkömmliche Brennerkonfiguration auf: Die Verbrennung geschieht hier durch Selbstzündung eines in die heissen Abgase 11 eingedüsten Brennstoffes 13. Ausgehend davon, dass es sich hier um einen gasförmigen Brennstoff, also beispielsweise Erdgas, handelt, müssen für eine Selbstzündung gewisse unabdingbare Voraussetzungen erfüllt werden: Zunächst ist davon auszugehen, dass eine Selbstzündung nach vorliegender Konstellation erst bei einer Temperatur um die 1000°C vonstatten geht, und dies soll auch bei Teillastbetrieb der Fall sein. Diese Forderung kann aber gewichtig eine optimale thermodynamische Auslegung des Gasturbinenprozesses negativ tangieren. Deshalb darf aus thermodynamischen Gründen das Druckverhältnis der HD-Turbine 3 nicht so weit angehoben werden, dass sich daraus eine niedrige Austrittstemperatur von beispielsweise ca. 500°C ergibt, wie sie für einen sicheren Betrieb einer nachgeschalteten konventionellen Brennkammer vorteilhaft wäre. Um eine gesicherte Selbstzündung in der ND-Brennkammer 4 auch bei ungünstigen Bedingungen zu gewährleisten, kann der in die ND-Brennkammer 4 eingedüste gasförmige Brennstoff 13 mit einer Menge eines anderen Brennstoffes 12, der eine niedrige Zündtemperatur aufweist, gemischt werden. Als Hilfsbrennstoff eines gasförmigen Basisbrennstoffes eignet sich hier Öl vorzüglich. Dieser flüssige Hilfsbrennstoff 12, entsprechend eingedüst, fungiert sozusagen als Zündschnur, und ermöglicht auch dann eine Selbstzündung in der ND-Brennkammer 4, wenn die Abgase 11 aus der HD-Turbine 3 eine Temperatur aufweisen, die unterhalb jener optimalen Selbstzündtemperatur liegt. Die in der ND-Brennkammer 4 bereitgestellten Heissgase 14 beaufschlagen anschliessend die ND-Turbine 5. Das kalorische Potential der Abgase 15 aus dieser ND-Turbine 5 kann weitergehend genutzt werden, beispielsweise durch Nachschaltung eines Dampfkreislaufes 7 zur Bereitstellung einer Dampfmenge zum Betreiben einer Dampfturbine, und/oder Vorwärmung des Einspritzwassers.

Insbesondere bei einer solchen Konfiguration ist die kalorische Belastung der Brennkammern sowie der Turbinen recht hoch, weshalb die Kühlung auch äusserst effizient ausfallen muss. Dabei muss gleichzeitig noch berücksichtigt werden, dass Gasturbogruppen dieser Hochleistungsstufe im allgemeinen wenig Luft zu Kühlzwecken freistellen können, sollen der Wirkungsgrad und die spezifische Leistung nicht markant sinken. Die Kühlung der kalorisch belasteten Aggregate kann aber vorteilhaft durch Dampf geschehen, der bei einem nachgeschalteten Dampfkreislauf ohnehin in genügender Menge und Qualität vorhanden ist.

Ein Behälter 20 enthält in angemessener Menge eine unter Druck 26 stehende Emulsion oder Lösung 19, welche sich aus einer Wassermenge 17 und einer entsprechend zugeteilten flüssigen Brennstoffmenge 18 zusammensetzt. Beide Medien 17, 18-werden durch entsprechende Pumpen 17a, 18a gefördert. Diese Emulsion 19 wird bei Bedarf, d.h. bei einer spontan notwendig gewordenen Leistungserhöhung aufgrund eines drohenden Netzzusammenbruches, in die HD-Brennkammer 2 und/oder ND-Brennkammer 4 eingespritzt. Die Mengen 21, 23 einer solchen Einspritzung werden durch ein geregeltes, simultan wirkendes Organ 22 beigestellt, wobei eine initiale Einspritzmenge durch die Verzögerung der Netzfrequenz bzw. der Drehzahl der Gasturbogruppe bestimmt wird. Zu diesem Zweck wird dieses Organ 22 durch ein von der Netzfrequenz abgefragtes Signal 24, das dann in einem Rechner 25 aufbereitet wird, geregelt. Dieser Rechner 25 sorgt zum Beispiel dafür, dass die kontinuierliche, fortlaufende Einspritzung der Emulsion oder Lösung entsprechend einem passenden Gesetz geschieht, dies in Funktion der Frequenz bzw. der Drehzahl des Generators 6. Die spontane Leistungserhöhung durch Einspritzung einer solchen brennstoffangereicherten Wassermenge ist simultan; eine Verzögerung in der Ansprechbarkeit oder gar eine Dämpfung der Leistung sind hier nicht gegeben. Die Brennstoffanreicherung der Emulsion oder Lösung 19 sowie deren Einspritzmenge stehen in Abhängigkeit zur möglichen Überlastbarkeit des Generators 6, der Stromableitung und mechanischen Komponenten. Die Einspritzung der mit Brennstoff angereicherten Wassers geschieht eventuell nur temporär. Sukzessiv kann auf reines Wasser bei Erhöhung der Brennstoffmengen 9/13 übergangen werden. Bei der hier beschriebenen Gasturbogruppe mit sequentieller Befeuerung ist aus thermodynamischer Sicht eine Überlastbarkeit von ca. 30% möglich. Wie schon erwähnt sind Emulsionen und Lösungen aus verschiedenen Basismedien mit verschiedenen Brennstoffarten möglich, wobei der Aggregatzustand der Eindüsungsmenge auch gasförmig sein kann. Grundsätzlich muss sichergestellt werden, dass die dem Wasser 17 beigegebene Brennstoffmenge 18 so bemessen ist, dass die Brennstoffenergie die Verdampfung des Wassers und dessen Überhitzung auf die Mischtemperatur am Eintritt der entsprechenden Turbine 3, 5 übernimmt. Im Falle von Alkohol als Brennstoff ist demnach eine Lösung mit etwa 15-20% Alkoholgehalt in Wasser erforderlich. Eine solche Lösung entspricht jener eines alkoholischen Lösung und ist problemlos in Behältern 20 zu lagern.

### Bezugszeichenliste

- 1: Verdichter
- 2: HD-Brennkammer
- 3: HD-Turbine
- 4: ND-Brennkammer
- 5: ND-Turbine
- 6: Generator
- 7: Dampfkreislauf
- 8: Verdichtete Luft
- 9: Brennstoff
- 10: Heissgase
- 11: Heisse Abgase
- 12: Hilfsbrennstoff
- 13: Brennstoff
- 14: Heissgase
- 15: Abgase
- 16: Ansaugluft
- 17: Wasser, Basismedium
- 17a: Förderpumpe
- 18: Brennstoff, Öl
- 18a: Förderpumpe
- 19: Emulsion, Lösung
- 20: Behälter
- 21: Einspritzmenge
- 22: Einspritzorgan
- 23: Einspritzmenge
- 24: Signal Generator
- 25: Rechner
- 26: Gasdruckpolster

## Patentansprüche

1. Verfahren zur Frequenzstützung beim Betrieb einer Kraftwerksanlage mit mindestens einer Brennkammer (2, 4) und einem Generator (6), wobei eine spontane Leistungserhöhung durch Zuführung eines zusätzlichen Mediums (19) in die mindestens eine Brennkammer (2, 4) der Kraftwerksanlage vorgenommen wird, wobei der Generator mit einem elektrischen Netz verbunden ist, wobei das elektrische Netz eine bestimmte Netzfrequenz aufweist,
**dadurch gekennzeichnet, dass**
- die Frequenz des Netzes oder die Drehzahl des Generators überwacht wird und
- das Medium (19) zur Frequenzstützung zur Verhinderung eines Netzzusammenbruchs nur bei einem bestimmten Frequenzrückgang oder bei einem bestimmten Gradienten des Frequenzrückgangs in die mindestens eine Brennkammer (2, 4) eingespritzt wird.

2. Verfahren nach Anspruch 1,
**dadurch gekennzeichnet, dass**
das in den Arbeitsprozess der Kraftwerksanlage eingeleitete Medium (19) aus einer Mischung einer Wassermenge (17) und einer Brennstoffmenge (18) gebildet wird.

3. Verfahren nach Anspruch 2,
**dadurch gekennzeichnet, dass**
der Wassermenge (17) ein Öl als Brennstoff (18) beigegeben wird, und dass die so geschaffene Emulsion (19) in einem Behälter (20) gespeichert wird.

4. Verfahren nach Anspruch 2,
**dadurch gekennzeichnet, dass**
der Wassermenge (17) ein Alkohol als Brennstoff (18) beigegeben wird, und dass die so geschaffene Lösung (19) in einem Behälter (20) gespeichert wird.

5. Verfahren nach den Ansprüchen 1-4,
**dadurch gekennzeichnet, dass**
das im Behälter (20) für den Arbeitsprozess der Kraftwerksanlage bereitgestellte Medium (19) unter einem Druck (26) gehalten wird.

6. Verfahren nach Anspruch 5,
**dadurch gekennzeichnet, dass**
eine Zuführung des Mediums (19) in den Prozess der Kraftwerksanlage über ein geregeltes Organ (22) vorgenommen wird.

7. Verfahren nach den Ansprüchen 1 und 2,
**dadurch gekennzeichnet, dass**
die Zumischung der Brennstoffmenge (18) so bemessen wird, dass die Verdampfung der Wassermenge (17) und dessen Überhitzung auf die Mischtemperatur am Eintritt einer Turbine (3, 5) der Kraftwerksanlage stattfindet.

8. Verfahren nach den Ansprüchen 1,
**dadurch gekennzeichnet, dass**
das Medium (19) als Funktion der Frequenz des Netzes oder der Drehzahl des Generators (6) eingespritzt wird.

9. Verfahren nach einem der Ansprüche 1 bis 8,
**dadurch gekennzeichnet, dass**
die Kraftwerksanlage mit mindestens einer Gasturbogruppe betrieben wird.

## Claims

1. Method for frequency support in operation of a power station system having at least one combustion chamber (2, 4) and a generator (6), a spontaneous power increase being carried out by supplying an additional medium (19) to the at least one combustion chamber (2, 4) of the power station system, with the generator being connected to an electrical power supply system at a specific power supply system frequency,
**characterized in that**
- the frequency of the network or the rotation speed of the generator is monitored, and
- the medium (19) for frequency support is injected into the at least one combustion chamber (2, 4) in order to prevent network collapse only when a specific reduction in frequency occurs or when the reduction in frequency has a specific gradient.

2. Method according to Claim 1, **characterized in that** the medium (19) which is introduced into the operating process of the power station system is formed from a mixture of an amount of water (17) and an amount of fuel (18).

3. Method according to Claim 2, **characterized in that** the amount of water (17) has an oil added to it as fuel (18), and **in that** the emulsion (19) produced in this way is stored in a container (20).

4. Method according to Claim 2, **characterized in that** the amount of water (17) has an alcohol added to it as fuel (18), and **in that** the solution (19) produced in this way is stored in a container (20).

5. Method according to Claims 1 - 4, **characterized in that** the medium (19) which is provided in the container (20) for the operating process of the power station system is kept under a pressure (26).

6. Method according to Claim 5, **characterized in that** the supply of the medium (19) to the process of the power station system is carried out via a controlled device (22).

7. Method according to Claims 1 and 2, **characterized in that** the addition of the amount of fuel (18) is dimensioned such that the vaporization of the amount of water (17) and its overheating to the mixing temperature take place at the inlet of a turbine (3, 5) of the power station system.

8. Method according to Claims 1 [sic], **characterized in that** the medium (19) is injected as a function of the frequency of the network or the rotation speed of the generator (6).

9. Method according to any of Claims 1 to 8, **characterized in that** the power station system is operated with at least one gas turbine group.

## Revendications

1. Procédé pour stabiliser la fréquence pendant l'exploitation d'une centrale électrique avec au moins une chambre de combustion (2, 4) et un générateur (6), dans lequel on opère une augmentation spontanée de la puissance par l'introduction d'un fluide supplémentaire (19) dans la au moins une chambre de combustion (2, 4) de la centrale électrique, dans lequel le générateur est relié à un réseau électrique, dans lequel le réseau électrique présente une fréquence de réseau déterminée, **caractérisé en ce que**
- l'on surveille la fréquence du réseau ou la vitesse de rotation du générateur, et
- pour stabiliser la fréquence en vue de prévenir un effondrement du réseau, on n'injecte le fluide (19) dans la au moins une chambre de combustion (2, 4) que dans le cas d'une diminution déterminée dé la fréquence ou dans le cas d'un gradient déterminé de la diminution de la fréquence.

2. Procédé selon la revendication 1, **caractérisé en ce que** le fluide (19) introduit dans le processus de travail de la centrale électrique est formé d'un mélange d'une quantité d'eau (17) et d'une quantité de combustible (18).

3. Procédé selon la revendication 2, **caractérisé en ce que** l'on ajoute une huile comme combustible (18) à la quantité d'eau (17) et **en ce que** l'on stocke dans un réservoir (20) l'émulsion ainsi produite (19).

4. Procédé selon la revendication 2, **caractérisé en ce que** l'on ajoute un alcool comme combustible (18) à la quantité d'eau (17) et **en ce que** l'on stocke dans un réservoir (20) la solution ainsi produite (19).

5. Procédé selon les revendications 1 à 4, **caractérisé en ce que** l'on maintient sous une pression (26) le fluide (19) préparé dans le réservoir (20) pour le processus de travail de la centrale électrique.

6. Procédé selon la revendication 5, **caractérisé en ce que** l'on opère une introduction du fluide (19) dans le processus de la centrale électrique par l'intermédiaire d'un organe régulé (22).

7. Procédé selon les revendications 1 et 2, **caractérisé en ce que** l'on dose l'addition de la quantité de combustible (18) de telle façon que l'évaporation de la quantité d'eau (17) et sa surchauffe à la température de mélange se produisent à l'entrée d'une turbine (3, 5) de la centrale électrique.

8. Procédé selon la revendication 1, **caractérisé en ce que** l'on injecte le fluide (19) en fonction de la fréquence du réseau ou de la vitesse de rotation du générateur (6).

9. Procédé selon l'une quelconque des revendications 1 à 8, **caractérisé en ce que** la centrale électrique fonctionne avec au moins un, groupe de turbine à gaz.
